# EUROPÄISCHE PATENTSCHRIFT

(11) **EP 3 322 662 B1**
(45) Veröffentlichungstag und Bekanntmachung des Hinweises auf die Patenterteilung: **02.12.2020**
(21) Anmeldenummer: 16739135.8
(22) Anmeldetag: 14.07.2016
(51) Int. Cl.: B66C 13/12

(54) **ANKOPPELUNGSEINHEIT**
COUPLING UNIT
UNITÉ DE COUPLAGE

(30) Priorität: 14.07.2015 DE 202015004918 U
(43) Veröffentlichungstag der Anmeldung: 23.05.2018
(73) Patentinhaber: Igus GmbH, 51147 Köln (DE)
(72) Erfinder: HERMEY, Andreas, 53773 Hennef (DE); HOWOLD, Philip, 50226 Frechen (DE)
(74) Vertreter: Lippert Stachow Patentanwälte Rechtsanwälte
(86) Internationale Anmeldenummer: PCT/EP2016/066837
(87) Internationale Veröffentlichungsnummer: WO 2017/009441

(56) Entgegenhaltungen:
- WO-A1-2012/130630
- DE-U1-202014 100 481

## Beschreibung

Die Erfindung betrifft eine Ankoppelungseinheit zur Einkoppelung eines frei fahrbaren Gerätes an ein Energiekettensystem, das eine Energiekette aufweist, die fest mit einem parallel zum Verfahrweg des Gerätes verfahrbaren Koppelwagen (Koppel-Trolley) verbunden ist, wobei die Ankopplungseinheit ein erstes Steckerteil aufweist, das mit dem Gerät flexibel und zugfest verbindbar ist und das mit einem am Koppelwagen angeordneten zweiten Steckerteil verbindbar ist, die Ankoppelungseinheit mit dem ersten Steckerteil in Richtung auf den Koppelwagen ausfahrbar ist, so dass die beiden Steckerteile horizontal und vertikal zueinander positionierbar und miteinander verbindbar sind, und die Ankoppelungseinheit nach Verbindung der beiden Steckerteile zurück fahrbar ist, wobei das Gerät und der Koppelwagen zugfest und flexibel miteinander verbunden bleiben.

Die Erfindung betrifft weiterhin ein System aus einer Ankoppelungseinheit der vorbeschriebenen Art und einem Koppelwagen.

Die Erfindung betrifft auch ein System aus einem frei fahrbaren Gerät mit einer Ankoppelungseinheit der vorbeschriebenen Art und aus einem Koppelwagen.

Die Erfindung betrifft schließlich auch ein Verfahren zum Einkoppeln eines frei fahrbaren Gerätes über eine Ankoppelungseinheit an ein Energiekettensystem, das eine Energiekette aufweist, die fest mit einem parallel zum Verfahrweg des Gerätes verfahrbaren Koppelwagen (Koppel-Trolley) verbunden ist, wobei die Ankoppelungseinheit ein erstes Steckerteil aufweist, das mit dem Gerät flexibel und zugfest verbunden ist und das mit einem am Koppelwagen angeordneten zweiten Steckerteil verbunden wird, die Ankoppelungseinheit mit dem ersten Steckerteil in Richtung auf den Koppelwagen ausgefahren wird, so dass die beiden Steckerteile horizontal und vertikal zueinander positioniert und miteinander verbunden werden.

Eine Ankoppelungseinheit der eingangs genannten Art , ein System aus Ankoppelungseinheit und Koppelwagen und ein System aus einem frei fahrbaren Gerät mit Ankoppelungseinheit und aus einem Koppelwagen sowie ein Verfahren der vorstehend genannten Art sind aus der DE 20 2014 100 481 U1 bekannt.

Als Gerät kommt zum Beispiel ein RTG (Rubber Tyred Gantry), ein dazu ähnliches Gerät, eine Krananlage oder sonstige Maschine in Frage. Das anzukoppelnde Gerät ist mehr oder weniger freifahrend und soll zu bestimmten Zwecken mit einem Energiekettensystem verbunden werden. Zweck dieser temporären Verbindung ist die Übertragung von Energie, Daten oder Medien. Dazu werden elektrische Leitungen, Lichtwellenleiter oder Schläuche durch geeignete Stecker miteinander verbunden.

Diese Verbindung findet auf einem in Längsrichtung parallel zur Energiekette und zum Verfahrweg des Gerätes mitfahrendem "Koppel-Trolley" statt. Dieser "Koppel-Trolley" trägt einen Teil des Steckers und ist fest mit der Energiekette verbunden. Der "Koppel-Trolley" ist längs verfahrbar auf einem geeigneten Profil gelagert und wird angetrieben, ist also "selbstfahrend".

Ziel der vorliegenden Erfindung ist:
- den automatischen Koppelvorgang zu realisieren,
- die Positionierung der Stecker vor dem Einkoppeln sicherzustellen,
- eine flexible zugfeste Verbindung zwischen dem Gerät und dem "Koppel-Trolley" zu erreichen, um Abweichungen der Verfahrwege zueinander ausgleichen zu können, und damit das Gerät dem "Koppel-Trolley" hinterherziehen kann,
- ein Ein- und Auskoppeln an jeder Position längs des Verfahrweges zu realisieren,
- so dass der "Koppel-Trolley" selbstfahrend an jede Position längs des Verfahrweges gelangen kann.

Um diese Ziele zu erreichen, wird erfindungsgemäß eine Ankoppelungseinheit der eingangs beschriebenen Art vorgeschlagen, wobei die Ankoppelungseinheit ein vertikal verschiebbares keilförmiges Schwert aufweist, an dem das erste Steckerteil angeordnet ist, und das Schwert so ausgebildet ist, dass es mit dem ersten Steckerteil hochhebbar ist, wenn der Koppelwagen beim Verfahren parallel zum Verfahrweg des Gerätes mit ausgefahrener Ankoppelungseinheit mit einer Führungseinrichtung auf das Schwert trifft, und beim Anhalten des Koppelwagens in einer vorbestimmten Position relativ zum Gerät das Schwert in eine Aufnahme des Koppelwagens fällt und diesen umschließt, wobei die beiden Steckerteile horizontal und vertikal zueinander positioniert sind.

Bei einem System aus einer Ankoppelungseinheit und einem Koppelwagen der eingangs beschriebenen Art werden die oben genannten Ziele dadurch erreicht, dass der Koppelwagen eine Führungseinrichtung aufweist, mit der ein am Gerät angeordnetes, vertikal verschiebbares Schwert mit dem ersten Steckerteil hochhebbar ist, wenn der Koppelwagen beim Verfahren parallel zum Verfahrweg des Gerätes mit ausgefahrener Ankoppelungseinheit mit der Führungseinrichtung auf das Schwert trifft, und das Schwert so ausgebildet ist, dass beim Anhalten des Koppelwagens in einer vorbestimmten Position relativ zum Gerät das Schwert in eine Aufnahme des Koppelwagens fällt und diesen umschließt, wobei die beiden Steckerteile horizontal und vertikal zueinander positioniert sind.

Bei einem System aus frei fahrbarem Gerät mit Ankoppelungseinheit und aus einem Koppelwagen der eingangs genannten Art werden die oben genannten Ziele ebenfalls durch die vorstehenden Lösungsmerkmale erreicht.

Weiterhin werden bei einem Verfahren der oben genannten Art die Ziele durch folgende Verfahrensmerkmale erreicht, nämlich dass der Koppelwagen beim Verfahren parallel zum Verfahrweg des Gerätes mit ausgefahrener Ankoppelungseinheit mit einer Führungseinrichtung auf ein am Gerät angeordnetes, vertikal verschiebbares Schwert trifft und dieses mit dem ersten Steckerteil hochhebt, der Koppelwagen danach bei hochgehobenem Schwert in einer vorbestimmten Position relativ zum Gerät anhält und das Schwert in dieser Position in einer Aufnahme des Koppelwagens fällt und diesen umschließt, wobei die beiden Steckerteile horizontal und vertikal zueinander positioniert sind, und die beiden Steckerteile danach miteinander verbunden werden.

Danach kann die Ankopplungseinheit bei weiterhin gekoppelten Steckerteilen zurückgefahren werden und, nachdem das Gerät wieder in Bewegung gesetzt wird, der Koppelwagen durch die flexible und zugfeste Verbindung mit dem Gerät von dem Gerät mitgezogen wird.

Die beiden Steckerteile können wieder voneinander getrennt werden, wobei das erste Steckerteil dann in die Ausgangsposition in der Ankopplungseinheit zurückgezogen werden kann.

Ein Ausführungsbeispiel der vorliegenden Erfindung wird im Folgenden anhand der Zeichnung näher beschrieben. In der Zeichnung zeigen:

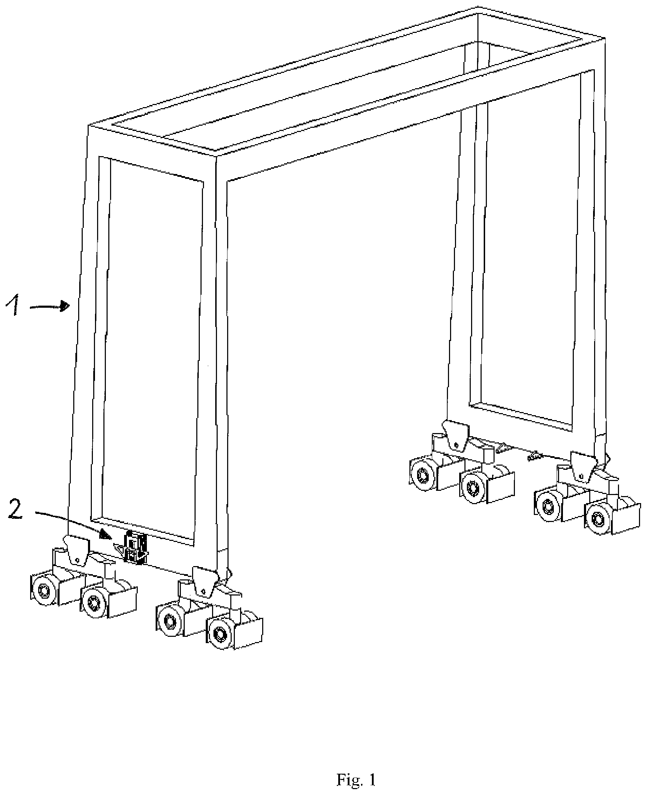

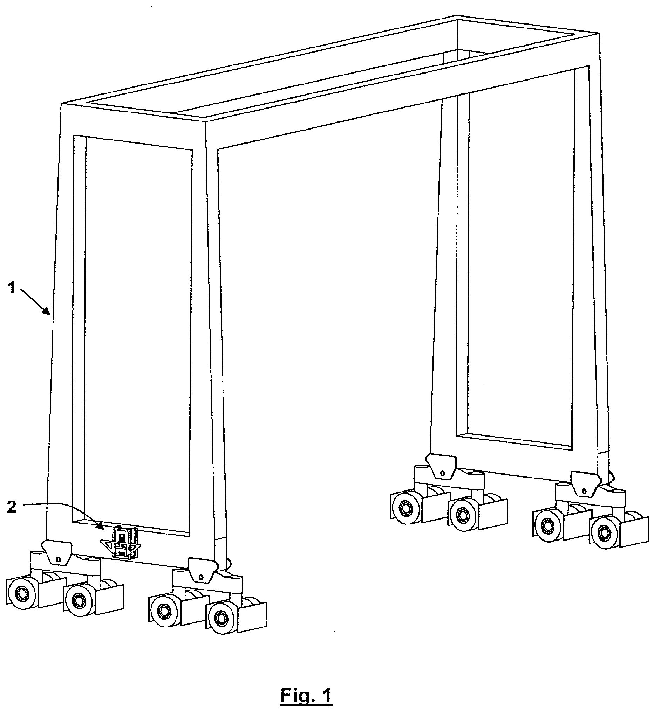

- Fig. 1: eine perspektivische Darstellung eines RTG (Rubber Tyred Gantry) als frei fahrbares Gerät,
- Fig. 2: das RTG gemäß Fig. 1 mit Ankoppelungseinheit in seitlicher Darstellung und einen "Koppel-Trolley" mit montiertem Führungssystem an einem Gestell,
- Fig. 3: einen vergrößerten Ausschnitt aus Fig. 2,
- Fig. 4: eine Frontansicht des unteren Bereichs des Gerätes sowie des Gestells sowie der Ankoppelungseinheit,
- Fig. 5: eine Frontansicht des unteren Bereichs des Gerätes und des Gestells sowie der ausgefahrenen Ankopplungseinheit,
- Fig. 6: eine perspektivische, rückwärtige Ansicht der ausgefahrenen Ankoppelungseinheit mit Schwert in einer Position, in der das Schwert auf eine Führungseinrichtung des "Koppel-Trolleys" trifft,
- Fig. 7: eine Ansicht wie in Fig. 6 in einer Position, in der das Schwert durch die Führungseinrichtung hoch gedrückt ist,
- Fig. 8: eine perspektivische Vorderansicht des "Koppel-Trolleys" und der Ankoppelungseinheit mit Schwert, wobei der "Koppel-Trolley" in der Mitte des Schwertes stoppt,
- Fig. 9: eine Ansicht wie in Figur 8, wobei das Schwert in eine Aufnahme des "Koppel-Trolleys" gefallen ist und ihn umschließt,
- Fig. 10: eine rückwärtige Ansicht der Position, in der das erste und zweite Steckerteil in horizontaler und vertikaler Übereinstimmung zum Koppeln bereit stehen,
- Fig. 11: eine rückwärtige Ansicht der Position, in der beide Steckerteile verbunden sind,
- Fig. 12: eine seitliche Ansicht der zurückgefahrenen Ankoppelungseinheit und des "Koppel-Trolleys" mit gekoppelten Steckerteilen und flexibler, zugfester Verbindung zwischen Gerät und "Koppel-Trolley" und
- Fig. 13: eine seitliche Ansicht gemäß Fig. 12 mit voneinander getrennten Steckerteilen.

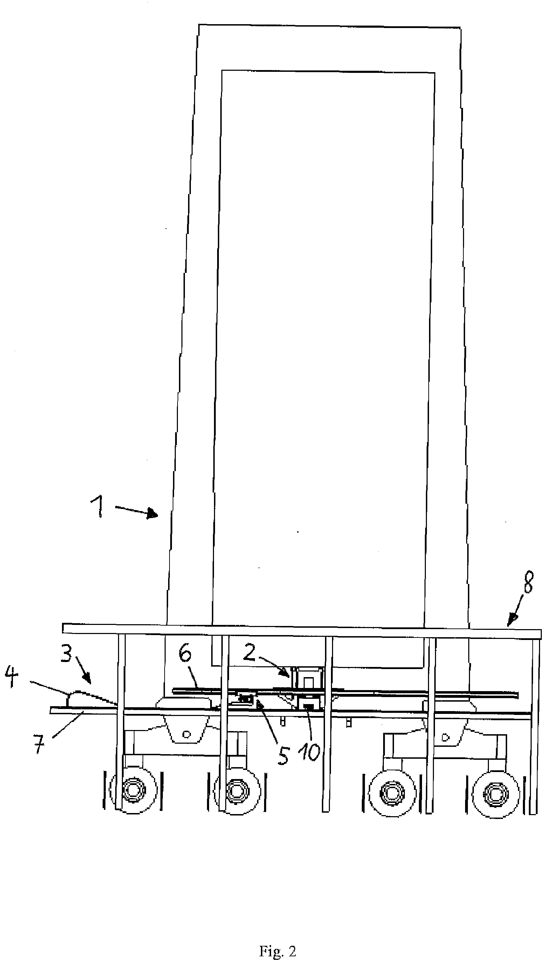

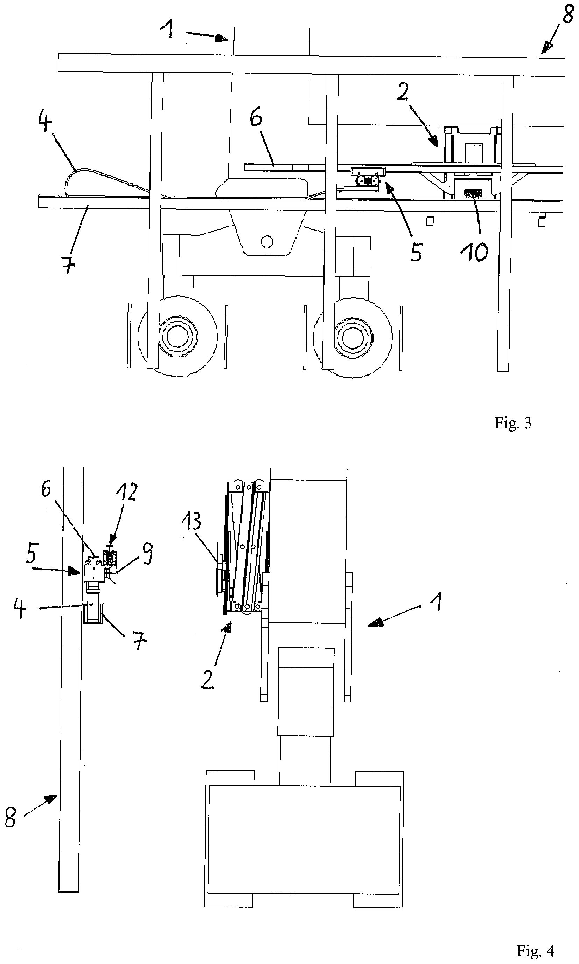

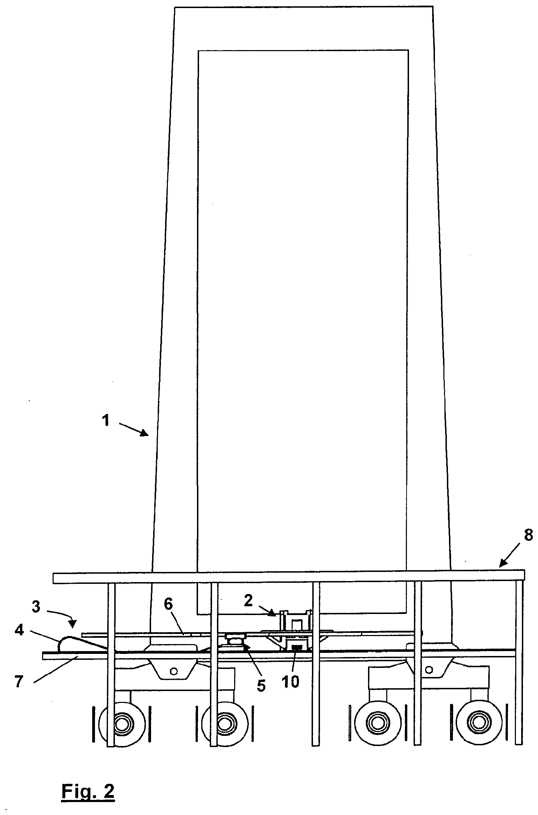

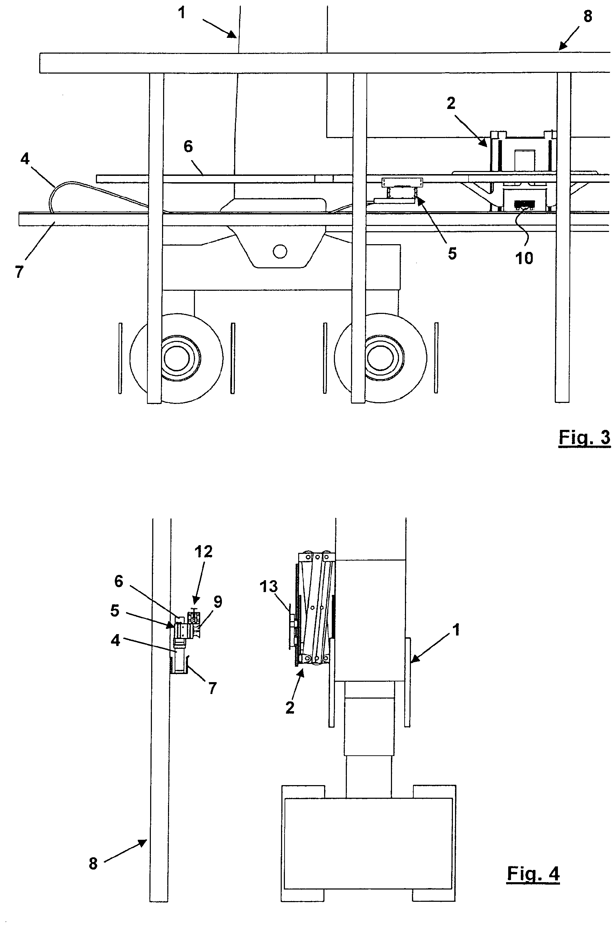

Ein System aus einem frei fahrbaren Gerät 1, hier einem RTG (Rubber Tyred Gantry), mit einer Ankoppelungseinheit 2 zur automatischen Einkoppelung des Gerätes 1 an ein Energiekettensystem 3, das eine Energiekette 4 aufweist, die fest mit einem Koppelwagen 5 ("Koppel-Trolley") verbunden ist, geht insbesondere aus den Figuren 2 - 4 hervor. Der Koppelwagen 5 ist auf einem geeigneten Profil 6 gelagert und parallel zum Verfahrweg des Gerätes 1 verfahrbar. Zur Übertragung von Energie, Daten oder Medien auf das anzukoppelnde Gerät 1 durch elektrische Leitungen, Lichtwellenleiter oder Schläuche ist der Koppelwagen 5 mit dem beweglichen Ende der Energieführungskette 4 verbunden. Die Energieführungskette 4 verläuft in einer insbesondere in den Figuren 3 und 4 gezeigten Führungsrinne 7 parallel zum Profil 6 und zum Verfahrweg des Gerätes 1. Das Profil 6, auf dem der Koppelwagen 5 verfahrbar ist, sowie die Führungsrinne 7 für die Energiekette 4 sind an einem Gestell 8 angeordnet.

Der Koppelwagen 5 trägt ein zweites Steckerteil 9 zur Herstellung einer Verbindung mit einem ersten Steckerteil 10, das an der Ankopplungseinheit 2 angeordnet und über eine flexible und zugfeste Verbindung 11, die ein zugfester Schlauch, ein Kabel oder eine Gliederkette sein kann, mit dem Gerät 1 verbunden ist.

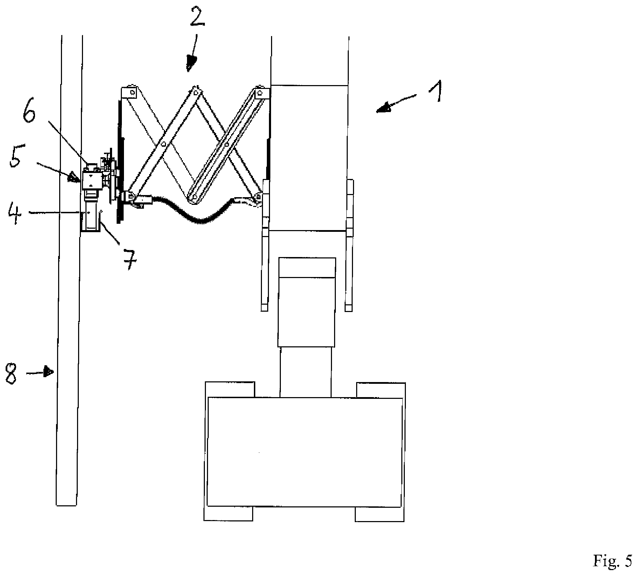

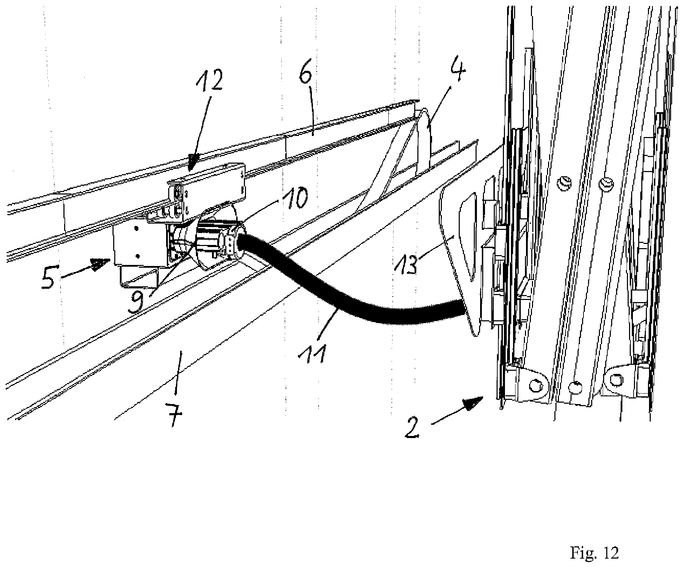

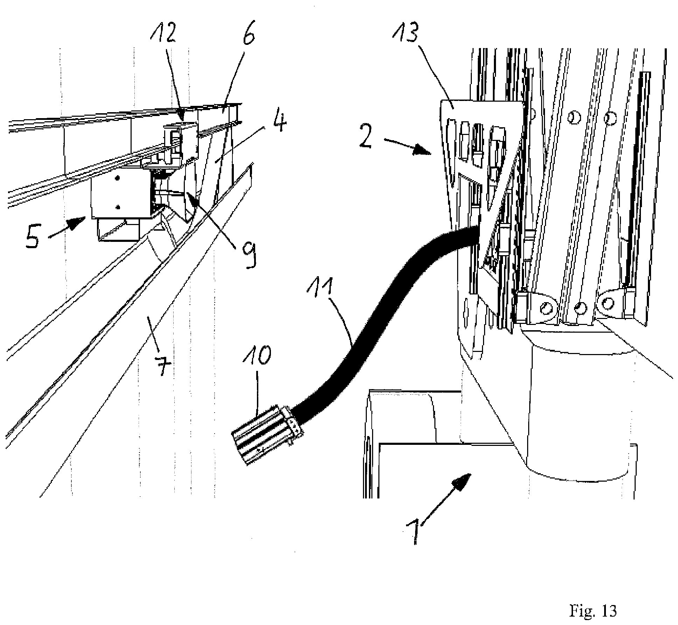

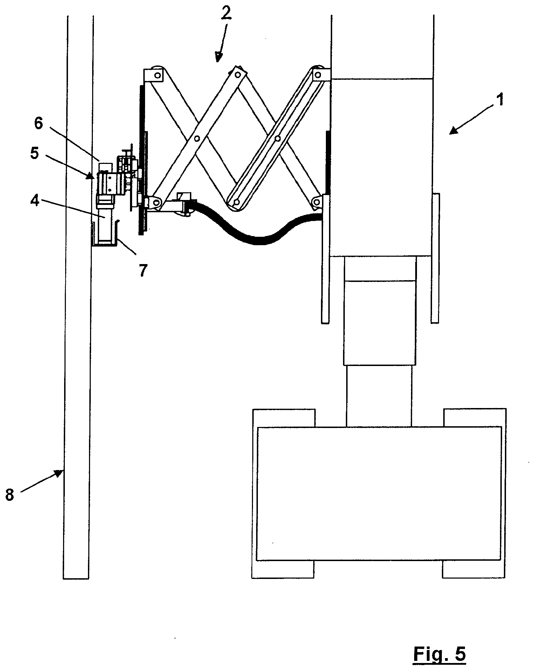

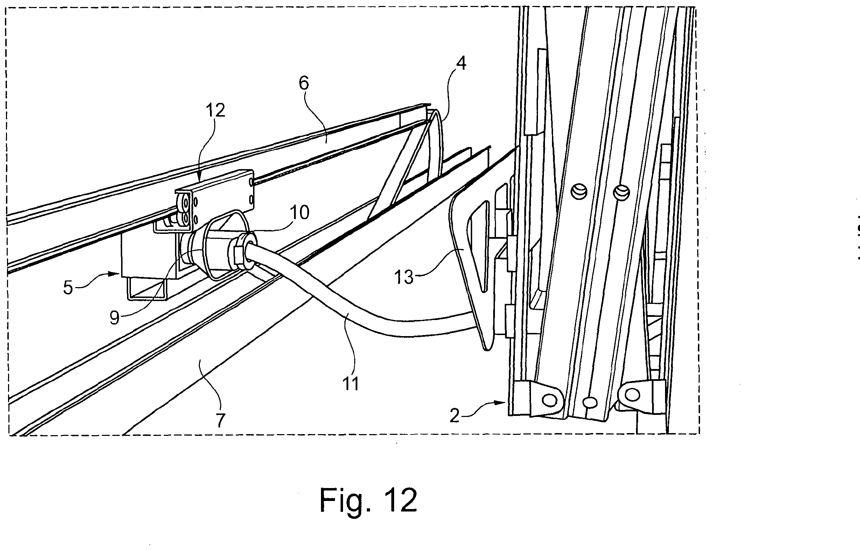

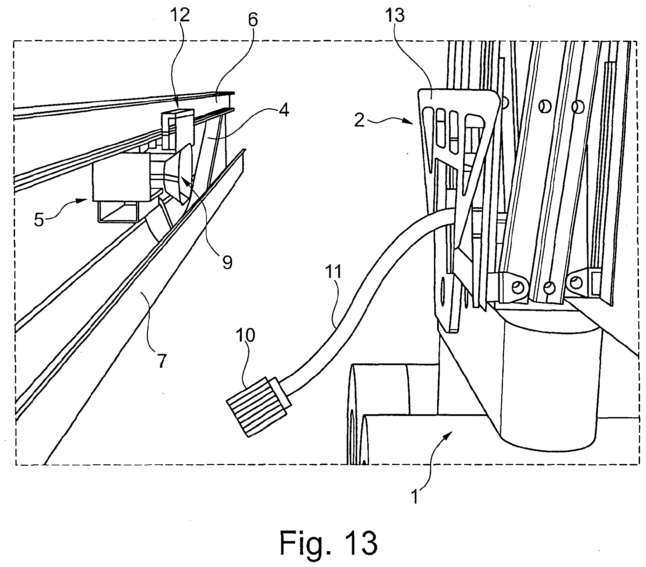

Wie insbesondere aus den Figuren 4 und 5 hervorgeht, ist die Ankoppelungseinheit in Richtung auf den Koppelwagen 5 ausfahrbar und von diesem zurückführbar, wie aus den Figuren 12 und 13 ersichtlich. Die Figuren 2 - 4 zeigen die Ankoppelungseinheit 2 in einem vorpositionierten, jedoch noch nicht ausgefahrenen Zustand. In einem solchen vorpositionierten Zustand, in dem der Koppelwagen 5 in horizontaler Richtung, wie die Figuren 2 und 3 zeigen, noch von der Ankoppelungseinheit 2 des Gerätes 1 entfernt ist, kann die Ankoppelungseinheit, wie in Figur 5 gezeigt, in Richtung auf den Koppelwagen 5 ausgefahren werden. Damit wird auch das erste Steckerteil 10 des Gerätes 1 in dieser Richtung bewegt. Die Ankoppelungseinheit 2 befindet sich nun in ihrer in Figur 5 dargestellten Warteposition. In dieser sind der Koppelwagen 5 und die Ankoppelungseinheit 2 in horizontaler Richtung, wie in Figur 3 dargestellt, weiterhin beabstandet.

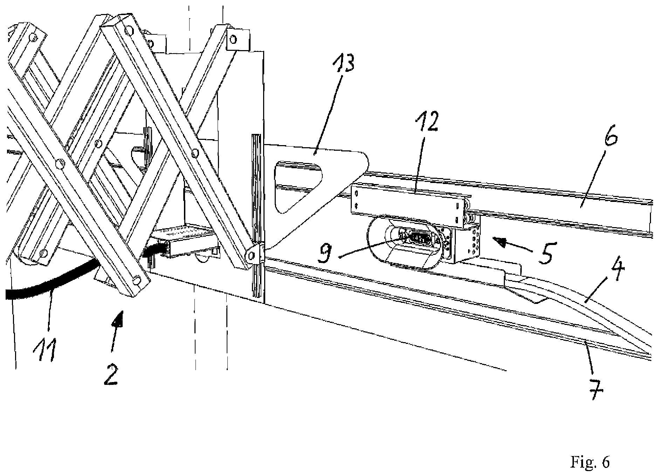

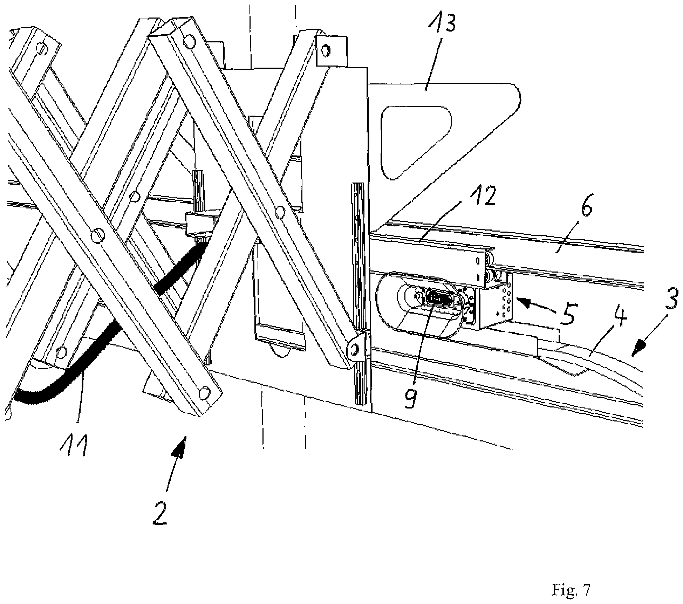

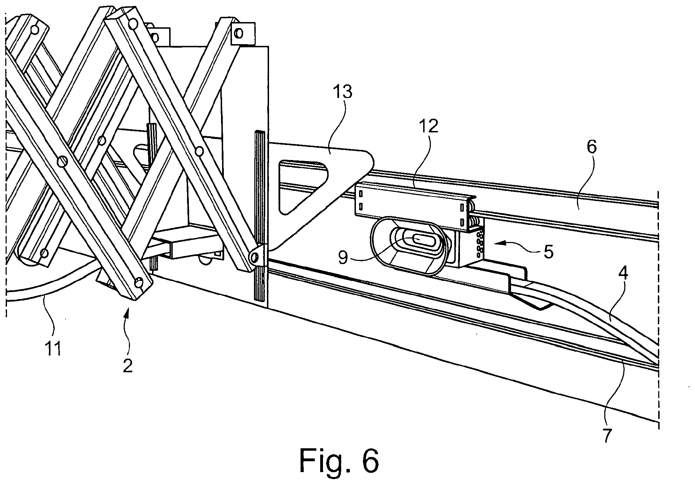

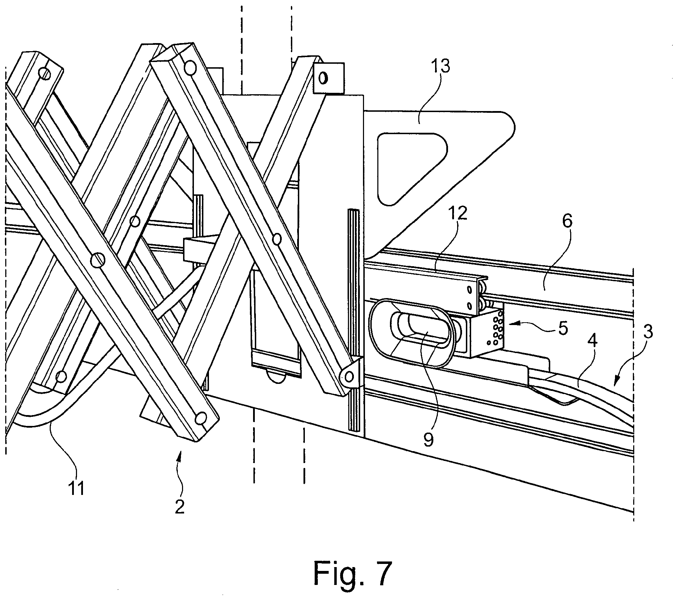

Aus der in Figur 5 dargestellten Warteposition kann sich dann der Koppelwagen 5 gemäß der Darstellung in Figur 3 nach rechts in Richtung auf die Ankoppelungseinheit 2 in Bewegung setzen. Bei dieser Bewegung trifft der Koppelwagen 5 mit einer geeigneten Führungseinrichtung 12 auf ein an der Ankoppelungseinheit 2 vertikal verschiebbares, keilförmiges Schwert 13, wie in Figur 6 gezeigt. Beim Weiterverfahren des Koppelwagens 5 gegen das Schwert 13 wird das Schwert 13 hochgedrückt, wodurch auch das erste Steckerteil 10 angehoben wird, wie aus Figur 7 hervorgeht.

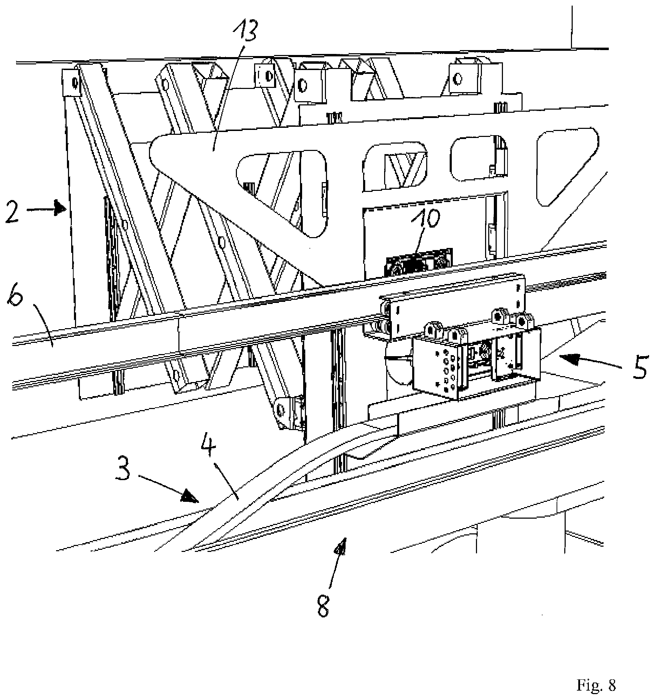

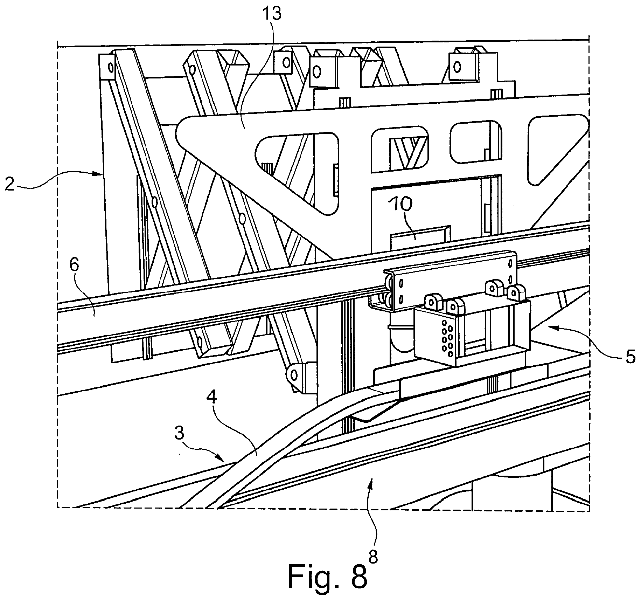

Der Koppelwagen 5 fährt weiter bis in eine Position, in der er sich in der Mitte des Schwertes 13 befindet, und stoppt in dieser Position, die Figur 8 zeigt. Die beiden Steckerteile 9 und 10 sind in dieser Position horizontal übereinstimmend positioniert.

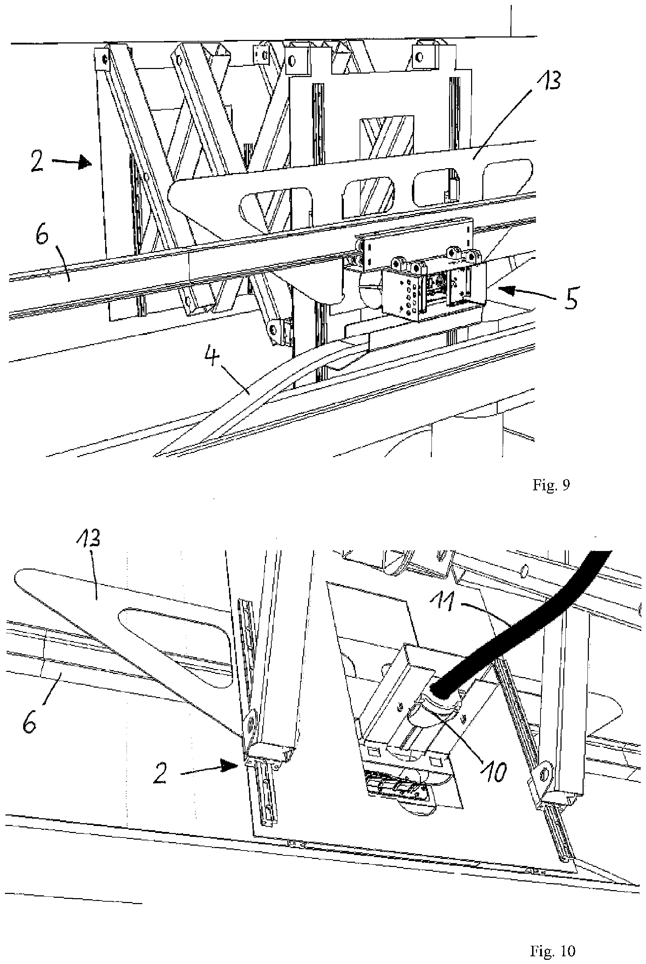

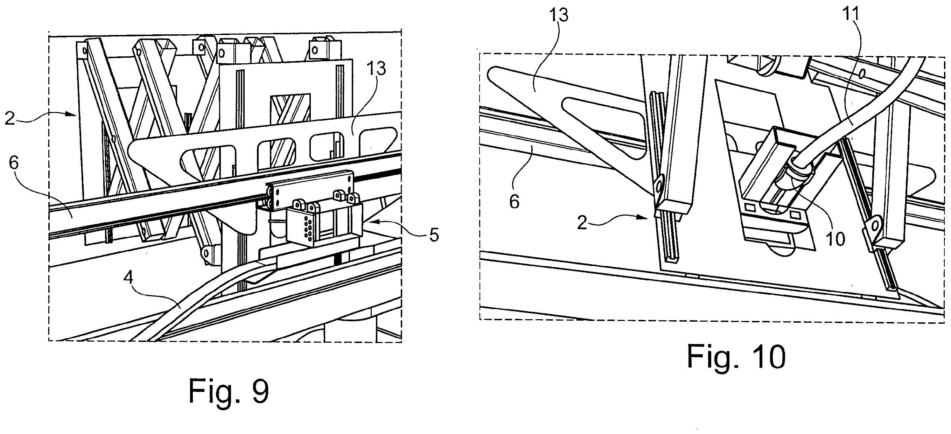

In dieser Position fällt das Schwert 13 durch seine Schwerkraft in eine geeignete Aufnahme des Koppelwagens 5, wobei es diesen umschließt, wie in Figur 9 dargestellt.

Damit befinden sich nun die beiden Steckerteile auch in vertikaler Richtung in einer übereinstimmenden Position und sind bereit zum Koppeln, wie aus Figur 10 hervorgeht.

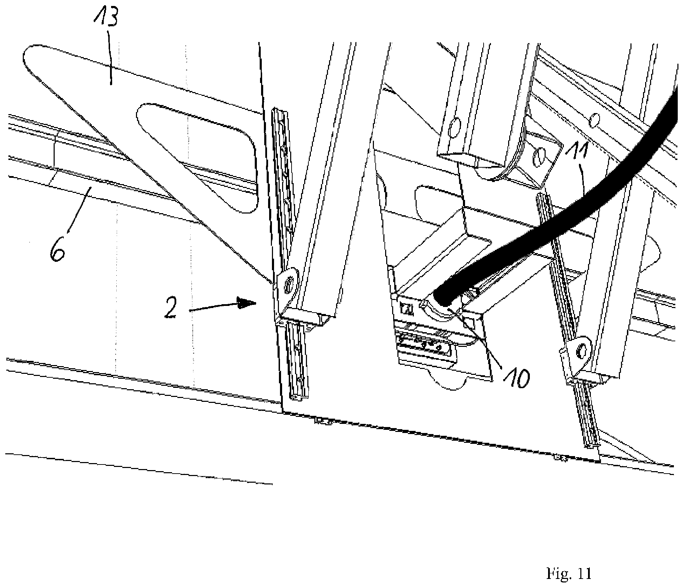

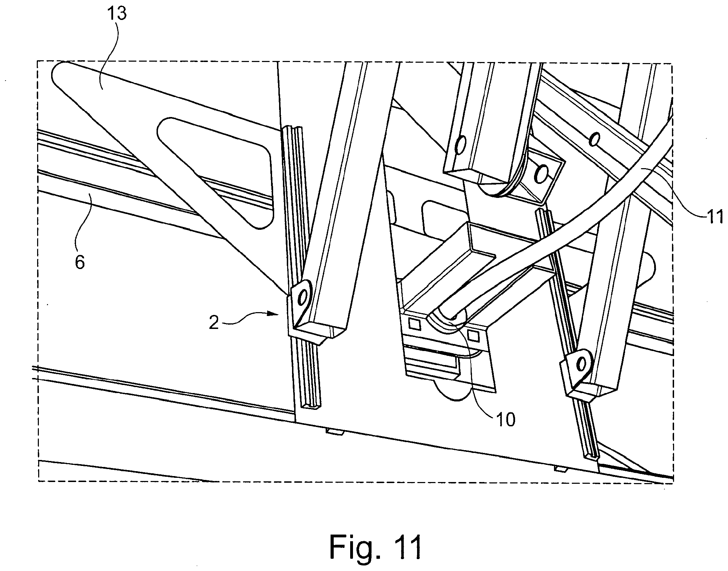

Figur 11 zeigt die Situation, in der die beiden Steckerteile 9 und 10 nach dem Steckvorgang miteinander verbunden sind. Damit steht die Verbindung (elektrisch/Daten/Medien) zwischen dem frei fahrbaren Gerät 1, hier RTG, über den Koppelwagen 5 und das Energiekettensystem 3 zu einem stationären Festpunkt.

Anschließend kann, wie in Figur 12 gezeigt, die Ankoppelungseinheit 2 zurückgefahren werden. Wie in Figur 12 dargestellt, bleiben die Steckerteile 9 und 10 weiterhin gekoppelt. Über die flexible und zugfeste Verbindung 10 ist somit der Koppelwagen 5 an das Gerät 1 angebunden. Damit kann sich das Gerät 1 in Fahrtrichtung in Bewegung setzen und den Koppelwagen 5 hinterher ziehen, wobei die Verbindungen aufrechterhalten werden.

Zur Auskoppelung, wie in Figur 13 gezeigt, werden die Steckerteile 9 und 10 wieder getrennt. Das erste Steckerteil 10 kann dann in die Ausgangsposition in der Ankopplungseinheit 2 zurückgezogen werden. Damit können das Gerät 1 und der Koppelwagen 5 wieder unabhängig voneinander verfahren.

### Bezugszeichenliste

- 1: frei fahrbares Gerät
- 2: Ankoppelungseinheit
- 3: Energiekettensystem
- 4: Energiekette
- 5: Koppelwagen
- 6: Profil
- 7: Führungsrinne
- 8: Gestell
- 9: zweites Steckerteil
- 10: erstes Steckerteil
- 11: Verbindung
- 12: Führungseinrichtung
- 13: Schwert

## Patentansprüche

1. Ankoppelungseinheit (2) zur Einkoppelung eines frei fahrbaren Gerätes (1) an ein Energiekettensystem (3), das eine Energiekette (4) aufweist, die fest mit einem parallel zum Verfahrweg des Gerätes (1) verfahrbaren Koppelwagen (5) verbunden ist, wobei die Ankoppelungseinheit (2) ein erstes Steckerteil (10) aufweist, dass mit dem Gerät (1) flexibel und zugfest verbindbar ist und das mit einem am Koppelwagen (5) angeordneten zweiten Steckerteil (9) verbindbar ist, die Ankoppelungseinheit (2) mit dem ersten Steckerteil (10) in Richtung auf den Koppelwagen (5) ausfahrbar ist, so dass die beiden Steckerteile (9, 10) horizontal und vertikal zueinander positionierbar und miteinander verbindbar sind, und die Ankoppelungseinheit (2) nach Verbindung der beiden Steckerteile (9, 10) zurückfahrbar ist, wobei das Gerät (1) und der Koppelwagen (5) zugfest und flexibel miteinander verbunden bleiben, **dadurch gekennzeichnet, dass** die Ankoppelungseinheit (2) ein vertikal verschiebbares keilförmiges Schwert (13) aufweist, an dem das erste Steckerteil (10) angeordnet ist, und das Schwert (13) so ausgebildet ist, dass es mit dem ersten Steckerteil (10) hochhebbar ist, wenn der Koppelwagen (5) beim Verfahren parallel zum Verfahrweg des Gerätes (1) mit ausgefahrener Ankoppelungseinheit (2) mit einer Führungseinrichtung (12) auf das Schwert (13) trifft, und beim Anhalten des Koppelwagens (5) in einer vorbestimmten Position relativ zum Gerät (1) das Schwert (13) in eine Aufnahme des Koppelwagens (5) fällt und diesen umschließt, wobei die beiden Steckerteile (9, 10) horizontal und vertikal zueinander positioniert sind.

2. System aus einer Ankoppelungseinheit (2) nach Anspruch 1 und aus einem parallel zum Verfahrweg des Gerätes (1) verfahrbaren, das zweite Steckerteil (9) aufweisenden Koppelwagen (5), **dadurch gekennzeichn et**, dass der Koppelwagen (5) eine Führungseinrichtung (12) aufweist, mit der das an der Ankoppelungseinheit (2) angeordnete, vertikal verschiebbare Schwert (13) mit dem ersten Steckerteil (10) hochhebbar ist, wenn der Koppelwagen (5) beim Verfahren parallel zum Verfahrweg des Gerätes (1) mit ausgefahrener Ankoppelungseinheit (2) mit der Führungseinrichtung (12) auf das Schwert (13) trifft, und der Koppelwagen (5) eine Aufnahme aufweist, in die das Schwert (13) beim Anhalten des Koppelwagens (5) in einer vorbestimmten Position relativ zum Gerät (1) fällt und den Koppelwagen (12) umschließt.

3. System aus einem frei fahrbaren Gerät (1) mit einer Ankoppelungseinheit (2) zur Einkopplung des frei fahrbaren Gerätes (1) an ein Energiekettensystem (3), und einem parallel zum Verfahrweg des Gerätes (1) verfahrbaren Koppelwagen (5) nach Anspruch 2.

4. Verfahren zum Einkoppeln eines frei verfahrbaren Gerätes (1) über eine Ankoppelungseinheit (2) an ein Energiekettensystem (3), dass eine Energiekette (4) aufweist, die fest mit einem parallel zum Verfahrweg des Gerätes (1) verfahrbaren Koppelwagen (5) verbunden ist, wobei die Ankoppelungseinheit (2) ein erstes Steckerteil (10) aufweist, das mit dem Gerät (1) flexibel und zugfest verbunden ist und das mit einem am Koppelwagen (5) angeordneten zweiten Steckerteil verbunden wird, die Ankoppelungseinheit (2) mit dem ersten Steckerteil (10) in Richtung auf den Koppelwagen (5) ausgefahren wird, so dass die beiden Steckerteile (9, 10) horizontal und vertikal zueinander positionierbar sind und miteinander verbunden werden, **dadurch gekennzeich net**, dass der Koppelwagen (5) beim Verfahren parallel zum Verfahrweg des Gerätes (1) mit ausgefahrener Ankoppelungseinheit (2) mit einer Führungseinrichtung (12) auf ein am Gerät (1) angeordnetes, vertikal verschiebbares Schwert (13) trifft und dieses mit dem ersten Steckerteil (10) hochhebt, der Koppelwagen (5)danach bei hochgehobenen Schwert(13) in einer vorbestimmten Position relativ zum Gerät (1) anhält und das Schwert (13) in dieser Position in eine Aufnahme des Koppelwagens (5) fällt und ihn umschließt, wobei die beiden Steckerteile (9, 10) horizontal und vertikal zueinander positioniert sind, und die beiden Steckerteile (9, 10) danach miteinander verbunden werden.

5. Verfahren nach Anspruch 4, **dadurch gekennzeichnet, dass** die Ankoppelungseinheit (2) bei weiterhin gekoppelten Steckerteilen (9, 10) zurückgezogen wird und, nachdem das Gerät (1) wieder in Bewegung gesetzt wird, der Koppelwagen (5) durch flexible und zugfeste Verbindung (11) mit dem Gerät (1) von dem Gerät (1) mitgezogen wird.

## Claims

1. A coupling unit (2) for coupling a freely displaceable device (1) into an energy chain system (3) having an energy chain (4) which is fixedly connected to a coupling carriage (5) which is displaceable parallel to the path of displacement of the device (1), wherein the coupling unit (2) has a first plug portion (10) which can be connected to the device (1) in flexible and tensile-resistant relationship and which can be connected to a second plug portion (9) arranged on the coupling carriage (5), the coupling unit (2) can be extended with the first plug portion (10) in the direction of the coupling carriage (5) so that the two plug portions (9, 10) can be positioned horizontally and vertically relative to each other and can be connected together, and the coupling unit (2) after connection of the two plug portions (9, 10) can be displaced back, wherein the device (1) and the coupling carriage (5) remain connected together in tensile-resistant and flexible relationship, **characterised in that** the coupling unit (2) has a vertically displaceable wedge-shaped blade (13) at which the first plug portion (10) is arranged and the blade (13) is so designed that it can be raised with the first plug portion (10) when the coupling carriage (5) upon displacement parallel to the path of displacement of the device (1) with the coupling unit (2) extended meets the blade (13) with a guide device (12) and when the coupling carriage (5) stops in a predetermined position relative to the device (1) the blade (13) falls into a receiving means of the coupling carriage (5) and embraces same, wherein the two plug portions (9, 10) are positioned horizontally and vertically relative to each other.

2. A system comprising a coupling unit (2) according to claim 1 and a coupling carriage (5), which comprises the second plug portion (9) and is displaceable parallel to the path of displacement of the device (1), **characterised in that** the coupling carriage (5) has a guide device (12) with which the vertically displaceable blade (13) arranged on the coupling unit (2) and having the first plug portion (10) can be raised when the coupling carriage (5) upon displacement parallel to the path of displacement of the device (1) with the coupling unit (2) extended meets the blade (13) and the coupling carriage (5) has a receiving means, into which the blade (13) falls when the coupling carriage (5) stops in a predetermined position relative to the device (1) and embraces the coupling carriage (12).

3. A system comprising a freely displaceable device (1) having a coupling unit (2) for coupling the freely displaceable device (1) into an energy chain system (3) and a coupling carriage (5) which is displaceable parallel to the path of displacement of the device (1) according to claim 2.

4. A method of coupling a freely displaceable device (1) by way of a coupling unit (2) into an energy chain system (3) having an energy chain (4) which is fixedly connected to a coupling carriage (5) which is displaceable parallel to the path of displacement of the device (1), wherein the coupling unit (2) has a first plug portion (10) which is connected to the device (1) in flexible and tensile-resistant relationship and which is connected to a second plug portion arranged at the coupling carriage (5), the coupling unit (2) is extended with the first plug portion (10) in the direction of the coupling carriage (5) so that the two plug portions (9, 10) can be positioned horizontally and vertically relative to each other and are connected together, **characterised in that** the coupling carriage (5) upon displacement parallel to the path of displacement of the device (1) with the coupling unit (2) extended meets a vertically displaceable blade (13) arranged on the device (1) with a guide device (12) and lifts same with the first plug portion (10), thereafter with the blade (13) lifted the coupling carriage (5) stops in a predetermined position relative to the device (1) and the blade (13) **in that** position falls into a receiving means of the coupling carriage (5) and embraces same, wherein the two plug portions (9, 10) are positioned horizontally and vertically relative to each other and the two plug portions (9, 10) are thereafter connected together.

5. A method as set forth in claim 4 **characterised in that** the coupling unit (2) with the plug portions (9, 10) still coupled is retracted and after the device (1) is set in movement again the coupling carriage (5) is entrained by the device (1) by flexible and tensile-resistant connection (11) to the device (1).

## Revendications

1. Unité de couplage (2) pour l'accouplement d'un dispositif (1) librement mobile à un système de chaîne d'énergie (3), qui présente une chaîne d'énergie (4) qui est reliée de manière fixe à un chariot d'accouplement (5) qui peut être déplacé parallèlement au chemin de mouvement du dispositif (1), l'unité de couplage (2) présentant une première partie de fiche (10) qui peut être reliée de manière flexible et résistante à la traction au dispositif (1) et qui peut être reliée à une deuxième partie de fiche (9) disposée sur le chariot d'accouplement (5), l'unité de couplage (2) peut sortir avec la première partie de fiche (10) vers le chariot d'accouplement (5) de sorte que les deux parties de fiche (9, 10) peuvent être positionnées horizontalement et verticalement l'une par rapport à l'autre et peuvent être reliées entre elles, et l'unité de couplage (2) peut être rentrée après que les deux parties de fiche (9, 10) ont été reliées, le dispositif (1) et le chariot d'accouplement (5) restant reliés entre eux de manière résistante à la traction et flexible, **caractérisé en ce que** l'unité de couplage (2) présente une lame (13) en forme de coin, déplaçable verticalement, sur laquelle est disposée la première partie de fiche (10), et la lame (13) est conçue de telle sorte qu'elle peut être soulevée avec la première partie de fiche (10), lorsque le chariot d'attelage (5) arrive sur la lame (13) avec un moyen de guidage (12) pendant un déplacement parallèle à la course du dispositif (1) avec l'unité de couplage (2) sortie, et lorsque le chariot d'accouplement (5) s'arrête dans une position prédéterminée par rapport au dispositif (1), la lame (13) tombe dans un réceptacle du chariot d'accouplement (5) et l'enferme, les deux parties de fiche (9, 10) étant positionnées horizontalement et verticalement l'une par rapport à l'autre.

2. Système composé d'une unité de couplage (2) selon la revendication 1 et d'un chariot d'accouplement (5) qui peut être déplacé parallèlement au chemin de mouvement du dispositif (1) et présente la deuxième partie de fiche (9), **caractérisé en ce que** le chariot d'accouplement (5) présente un dispositif de guidage (12) avec lequel la lame (13) disposée sur l'unité de couplage (2) et pouvant être déplacée verticalement peut être soulevée avec la première partie de fiche (10), lorsque le chariot d'attelage (5) arrive sur la lame (13) avec le moyen de guidage (12) pendant un déplacement parallèle à celui du dispositif (1) avec l'unité de couplage (2) sortie, et le chariot d'accouplement (5) a un réceptacle dans lequel la lame (13) tombe lorsque le chariot d'accouplement (5) s'arrête à une position prédéterminée par rapport au dispositif (1) et entoure le chariot d'attelage (12).

3. Système composé d'un dispositif librement mobile (1) avec une unité de couplage (2) pour l'accouplement du dispositif librement mobile (1) à un système de chaîne d'énergie (3), et avec un chariot d'accouplement (5) mobile parallèlement au mouvement du dispositif (1) selon la revendication 2.

4. Procédé d'accouplement d'un dispositif (1) librement mobile par l'intermédiaire d'une unité de couplage (2) à un système de chaîne d'énergie (3) qui comporte une chaîne d'énergie (4) qui est reliée de manière fixe à un chariot d'accouplement (5) qui peut être déplacé parallèlement au mouvement du dispositif (1), l'unité de couplage (2) comportant une première partie de fiche (10), qui est reliée de manière flexible et résistante à la traction au dispositif (1) et qui est reliée à une deuxième partie de fiche disposée sur le chariot d'accouplement (5), l'unité d'accouplement (2) avec la première partie de fiche (10) est sortie vers le chariot d'accouplement (5) de sorte que les deux parties de fiche (9, 10) peuvent être positionnées horizontalement et verticalement l'une par rapport à l'autre et sont reliées entre elles, **caractérisé en ce que,** lors d'un déplacement parallèle au mouvement du dispositif (1) avec l'unité d'accouplement (2) sortie, le chariot d'accouplement (5) arrive sur une lame (13) déplaçable verticalement, disposée sur le dispositif (1) avec un dispositif de guidage (12) et soulève cette lame (13) avec la première partie de fiche (10), le chariot d'accouplement (5) s'arrête ensuite dans une position prédéterminée par rapport au dispositif (1) lavec la lame (13) soulevée, et la lame (13) dans cette position tombe dans un réceptacle du chariot d'accouplement (5) et l'entoure, les deux parties de fiche (9, 10) étant positionnées horizontalement et verticalement l'une par rapport à l'autre, et les deux parties de fiche (9, 10) étant ensuite reliées l'une à l'autre.

5. Procédé selon la revendication 4, **caractérisé en ce que** l'unité de couplage (2) est rétractée alors que les parties de fiche (9, 10) sont encore accouplées et, après que le dispositif (1) a été remis en mouvement, le chariot d'accouplement (5) est tiré par le dispositif (1) au moyen d'une liaison (11) flexible et résistante à la traction avec le dispositif (1).
